# EUROPÄISCHE PATENTSCHRIFT

(11) **EP 2 223 049 B1**
(45) Veröffentlichungstag und Bekanntmachung des Hinweises auf die Patenterteilung: **18.05.2011**
(21) Anmeldenummer: 08863237.7
(22) Anmeldetag: 18.12.2008
(51) Int. Cl.: G01D 1/02, G01D 1/18, G01D 3/032

(54) **VERFAHREN ZUR SICHEREN ERFASSUNG MEHRERER ANALOGER EINGANGSSIGNALE, ANALOGE EINGABESCHALTUNG SOWIE MESSSENSOR UND MESSUMFORMER MIT EINER DERARTIGEN ANALOGEN EINGABESCHALTUNG**
METHOD FOR THE SECURE ACQUISITION OF MULTIPLE ANALOG INPUT SIGNALS, ANALOG INPUT CIRCUIT, AND MEASURING SENSOR AND MEASURING TRANSDUCER HAVING AN ANALOG INPUT CIRCUIT OF THIS TYPE
PROCÉDÉ D'ACQUISITION SÉCURISÉE DE PLUSIEURS SIGNAUX D'ENTRÉE ANALOGIQUES, CIRCUIT D'ENTRÉE ANALOGIQUE AINSI QUE CAPTEUR DE MESURE ET CONVERTISSEUR DE MESURE ÉQUIPÉS DUDIT CIRCUIT D'ENTRÉE ANALOGIQUE

(30) Priorität: 19.12.2007 DE 102007061282
(43) Veröffentlichungstag der Anmeldung: 01.09.2010
(73) Patentinhaber: Siemens Aktiengesellschaft, 80333 München (DE)
(72) Erfinder: BAUER, Daniel, 76337 Waldbronn (DE); CHEMISKY, Eric, F-67250 Soultz Sous Forets (FR); ECKTHALER, Sabine, 76764 Rheinzabern (DE); GEPPERT, Michael, 77833 Ottersweier (DE); HAHN, Ulrich, 66822 Lebach (DE); PRAMANIK, Robin, 76135 Karlsruhe (DE); ROHRBACH, Simon, 76137 Karlsruhe (DE); SCHMITH, Peter, 76767 Hagenbach (DE); SCHULMEISTER, Kurt, 76571 Gaggenau (DE); SPATZ, Martin, 76829 Landau (DE); WALTER, Ralf, 68753 Waghäusel (DE)
(74) Vertreter: Wolff, Harry
(86) Internationale Anmeldenummer: PCT/EP2008/067957
(87) Internationale Veröffentlichungsnummer: WO 2009/077609

(56) Entgegenhaltungen:
- EP-A- 0 756 427
- US-A- 4 125 894
- US-A- 4 810 953
- US-A- 5 801 645

## Beschreibung

Die Erfindung betrifft ein Verfahren zur sicheren Erfassung mehrerer analoger Eingangssignale, welche mittels eines ersten und zweiten A/D-Umsetzers in entsprechende digitale Einzelmesswerte umgesetzt werden.

Die Erfindung betrifft eine analoge Eingabeschaltung mit elektrischen Eingängen für mehrere analoge Eingangssignale, mit einem Messwertausgang zur Ausgabe korrespondierender Messwerte und mit einem Meldeausgang zur Ausgabe einer Meldung, insbesondere einer Fehler- oder Warnmeldung. Die analoge Eingabeschaltung weist eine übergeordnete Steuereinheit, zwei A/D-Umsetzer sowie zumindest einen vorgeschalteten ansteuerbaren Multiplexer zum Schalten zumindest eines Teils der Eingangssignale an den jeweiligen A/D-Umsetzer mittels der Steuereinheit auf.

Schließlich betrifft die Erfindung einen Messsensor sowie einen Messumformer, insbesondere zum Betrieb an einer Zweileiter-Stromschleife. Der Messsensor sowie der Messumformer weisen jeweils mehrere Sensoreinheiten zur Erfassung physikalischer Messgrößen wie Druck, Kraft, Temperatur oder dergleichen sowie zumindest eine derartige analoge Eingabeschaltung zur Erfassung entsprechender, von den jeweiligen Sensoreinheiten stammender analoger Eingangssignale auf.

Die analogen Eingangssignale können prinzipiell von beliebigen Signalquellen stammen, wie z.B. von einem Messsensor oder von einer Audio- oder Videoquelle.

Schwerpunkt der vorliegenden Anmeldung sind Verfahren, bei denen physikalische Größen, wie z.B. Druck, Temperatur, Kraft, Durchfluss oder dergleichen, als Messgrößen erfasst werden. Die Messgrößen stammen typischerweise von Sensoreinheiten, wie z.B. von einem Druck-, Temperatur-, Kraft- oder Durchflusssensor. Die Sensoreinheiten können z.B. in einen Messsensor oder in einen Messumformer integriert sein oder an diese angeschlossen sein. Bei einem Messumformer handelt es sich um ein Feldgerät, welches typischerweise in der Anlagen- und Automatisierungstechnik, wie z.B. in der chemischen Industrie, Petrochemie und im Untertagebau, eingesetzt wird. Derartige Messumformer, wie z.B. vom Typ SITRANS P der Fa. Siemens, werden zur Übertragung eines Messwertes an einer Zweileiter-Stromschleife betrieben. Über dieselbe Zweileiter-Stromschleife werden die Messumformer auch mit elektrischer Energie zur Speisung der elektronischen Schaltkreise versorgt.

Üblicherweise weisen derartige Messsensoren und Messumformer eine oder mehrere analoge Eingabeschaltungen auf, welche die Messungen mittels entsprechender Messverfahren durchführen. Hierzu weisen die analogen Eingabeschaltungen einen oder mehrere sogenannte Analog-/Digital-Umsetzer, kurz A/D-Umsetzer, auf. Sie setzen ein anliegendes analoges Eingangssignal bzw. Messsignal in einen korrespondierenden digitalen Messwert um. Die Genauigkeit eines zu erfassenden Eingangsignals kann durch Mittelung aus mehreren Einzelmesswerten erhöht werden. Ist eine Erfassung mehrerer Eingangssignale vorgesehen, so kann dem A/D-Umsetzer ein analoger Multiplexer vorgeschaltet sein. Dieser kann z.B. von einer übergeordneten Steuereinheit, wie z.B. von einem Mikrocontroller, zur Auswahl des gewünschten Messkanals angesteuert werden. Der Multiplexer kann alternativ bereits im A/D-Umsetzer integriert sein. Im diesem Fall weist der A/D-Umsetzer mehrere Signaleingänge für die analogen Eingangssignale auf.

Zur Erfassung der eingangs genannten Messgrößen sind bei den Messsensoren und Messumformern, insbesondere zur exakten Regelung von industriellen oder chemischen Prozessen, hochgenaue und zugleich schnelle Messungen erforderlich, um beispielsweise im Falle eines Druckabfalls prozesstechnisch schnell eingreifen zu können. Messsensoren und Messumformer, an welche zudem hohe Anforderungen an Betriebssicherheit und Zuverlässigkeit gestellt werden, müssen auch in zunehmendem Maße zertifiziert sein, wie z.B. gemäß der sogenannten SIL-Norm nach IEC 61508 (SIL für Safety Integrity Level).

Zur Erfüllung dieser Norm ist es bekannt, die Messsensoren bzw. die Messumformer redundant aufzubauen. Nachteilig bei dieser Lösung sind der große Platzbedarf sowie die hohen Kosten aufgrund der doppelten oder gar mehrfachen Ausführung. Es sind auch Messgeräte bekannt, welche die obengenannte Norm erfüllen und zugleich nichtredundant ausgelegt sind. Derartige Messgeräte sind allerdings sehr teuer, da die erforderlichen A/D-Umsetzer sehr schnell, sicher und zugleich auch noch hochgenau sein müssen. Derartige spezielle A/D-Umsetzer kosten im Vergleich zu herkömmlichen A/D-Umsetzern, die vergleichsweise entweder schnell und weniger genau oder hochgenau und langsam sind, ein Vielfaches. Häufig liegen die Kosten für die speziellen A/D-Umsetzer um Größenordnungen über denen von kommerziellen A/D-Umsetzern, die in hohen Stückzahlen gefertigt werden. Dabei ist auch zu berücksichtigen, dass sich die Abtastrate durch das Multiplexen der analogen Eingangssignale drastisch verringert. Bei üblicherweise verwendeten Sigma-Delta-Umsetzern kann sich die Abtastrate sogar um den Faktor 6 reduzieren, auch wenn z.B. zwei oder drei Eingangssignale "gemultiplext" werden. Der Grund dafür liegt in der notwendigen Einschwingzeit der Filter im Eingangskreis der A/D-Umsetzer.

Aus der EP 0 756 427 A1 ist ein System zur Detektion von Signalen in einer verrauschten Umgebung bekannt. In dem System werden Messwerte digitalisiert, gespeichert, gemittelt und im Hinblick auf Schwellwertüberschreitung ausgewertet.

Es ist somit eine Aufgabe der Erfindung, ein Verfahren zur sicheren Erfassung mehrerer analoger Eingangssignale sowie eine analoge Eingabeschaltung zur Durchführung dieses Verfahrens anzugeben.

Es ist eine weitere Aufgabe der Erfindung, einen geeigneten Messsensor sowie einen geeigneten Messumformer mit einer derartigen analogen Eingabeschaltung anzugeben.

Die Aufgabe der Erfindung wird für das Verfahren mit den Merkmalen des Patentanspruchs 1 gelöst. Vorteilhafte Verfahrensvarianten sind in den abhängigen Ansprüchen 2 bis 6 genannt. Im Anspruch 7 ist eine analoge Eingabeschaltung zur Durchführung des erfindungsgemäßen Verfahrens angegeben. Im Anspruch 8 sind ein Messsensor und im Anspruch 9 ein Messumformer jeweils mit einer erfindungsgemäßen analogen Eingabeschaltung genannt.

Das Verfahren ist gemäß der Erfindung zur sicheren Erfassung mehrerer analoger Eingangssignale bestimmt. Die Eingangssignale werden mittels zweier A/D-Umsetzer in entsprechende digitale Einzelmesswerte umgesetzt. Es wird ein erster Messmittelungszyklus mit einer vorgegebenen Gesamtanzahl von Messtakten von einer übergeordneten Steuereinheit vorgegeben. Es können die A/D-Umsetzer mittels zumindest eines von der Steuereinheit ansteuerbaren Multiplexers an zumindest einen Teil der Eingangssignale geschaltet werden. Es wird jeweils innerhalb des ersten Messmittelungszyklus ein erstes Eingangssignal von dem ersten A/D-Umsetzer in einer ersten, vorzugsweise einer der Gesamtzahl entsprechenden Anzahl von Messtakten erfasst und von der Steuereinheit kumulierend zu einem ersten Messwert gemittelt. Es wird ein zweites Eingangssignal von dem zweiten A/D-Umsetzer in einer im Vergleich zur ersten Anzahl geringeren Anzahl von Messtakten erfasst und kumulierend zu einem zweiten Messwert gemittelt. Es wird das erste Eingangssignal von dem zweiten A/D-Umsetzer in einer dritten Anzahl von Messtakten, vorzugsweise in nur einem Messtakt, als zumindest ein weiterer Einzelmesswert erfasst. Es wird eine Meldung ausgegeben, wenn eine Abweichung des zumindest einen weiteren Einzelmesswerts (D1') von dem synchron vom ersten A/D-Umsetzer (2) erfassten Einzelmesswert (D1) oder von den bis dahin gemittelten ersten Messwerten (MW1') einen maximal zulässigen Betrag der Abweichung überschreitet.

Der besondere Vorteil der Erfindung ist, dass durch gezielte Ansteuerung zweier "herkömmlicher" A/D-Umsetzer eine vergleichsweise schnelle, sichere und zugleich hochgenaue Messung der analogen Eingangssignale möglich ist. Hierzu wird ein überwachungsbedürftiges erstes analoges Eingangssignal als Träger einer Hauptmessgröße in einer Vielzahl von Messtakten von einem der beiden A/D-Umsetzer zu einem hochgenauen digitalen Messwert gemittelt. Währenddessen wird dieses Eingangssignal noch ein- oder mehrmals "zwischendrin" von dem anderen der beiden A/D-Umsetzer kurzzeitig "mitgemessen", um beide gleichen Eingangssignale auf Abweichungen voneinander hin zu überprüfen. Dadurch kann eine plötzliche Änderung des ersten Sensorsignals, wie z.B. eines Druckwertes oder eines Durchflusswertes bei einem Druckausfall, vorteilhaft sehr schnell erkannt werden. Es kann dann z.B. ein übergeordneter Prozessrechner regelungstechnisch sofort in den Prozess eingreifen.

Aus dem Vergleich der Messwerte der beiden A/D-Umsetzer kann auch unmittelbar festgestellt werden, ob noch eine genaue Messwerterfassung innerhalb spezifizierter Toleranzgrenzen möglich ist. Eine unzulässige Abweichung ist dabei ein sicheres Indiz für einen Ausfall oder für ein fehlerhaftes Verhalten eines der beiden A/D-Umsetzer. Ein solcher bzw. ein solches zeigt sich bei einer signifikanten Messwertabweichung.

Ein gleichzeitiger, jedoch äußerst unwahrscheinlicher Ausfall beider A/D-Umsetzer im Sinne eines doppelten Fehlers, wird hier nicht weiter berücksichtigt. Ist auch ein Ausschluss eines solchen Fehlers notwendig, so können z.B. zwei technisch unterschiedlich ausgeführte A/D-Umsetzer, insbesondere von unterschiedlichen Herstellern, eingesetzt werden, um die Wahrscheinlichkeit des Vorliegens eines systematischen Fehlers drastisch zu reduzieren. Alternativ oder zusätzlich kann ein dritter A/D-Umsetzer vorgesehen sein, um eine noch höhere Sicherheit im Sinne einer 2-aus-3-Entscheidung zu erreichen.

Die zwei A/D-Umsetzer, welche hinsichtlich ihrer Genauigkeit und Geschwindigkeit gegeneinander variiert werden können, sind z.B. sogenannte U-f-Umsetzer (U für Spannung, f für Frequenz), Sigma-Delta-Umsetzer oder Dual-Slope-Umsetzer. Die beiden Umsetzer werden derart untereinander verschaltet, dass sie alle zu erfassenden Eingangssignale umsetzen können. Die Verschaltung kann mittels eines gemeinsamen analogen Multiplexers erfolgen. Sie kann über jeweils einen Multiplexer erfolgen, der einem A/D-Umsetzer vorgeschaltet ist. Der Multiplexer kann in den A/D-Umsetzer bereits integriert sein. Es können beide A/D-Umsetzer zusammen mit dem Multiplexer in ein gemeinsames elektronisches Bauteil integriert sein. Alternativ kann die Funktion eines derartigen Bauteils Teil einer Steuereinheit sein, wie z.B. eines Mikrocontrollers.

Nach einer Verfahrensvariante wird von der übergeordneten Steuereinheit ein zweiter Messmittelungszyklus mit der gleichen Gesamtanzahl von Messtakten vorgegeben. Es wird die Zuordnung der A/D-Umsetzer zu den analogen Eingangssignalen nach jedem Messmittelungszyklus gewechselt.

Der Vorteil dieser Verfahrensvariante liegt darin, dass mittels der Steuereinheit der jeweilige fehlerhaft arbeitende A/D-Umsetzer ermittelt werden kann. In diesem Fall kann eine exakte Fehlermeldung z.B. an ein Überwachungsgerät oder an einen Computer ausgegeben werden.

Einer weiteren Verfahrensvariante zufolge wird der zumindest eine Multiplexer von der übergeordneten Steuereinheit derart angesteuert, dass vom jeweiligen A/D-Umsetzer neben dem zweiten Eingangssignal ein drittes Eingangssignal oder weitere Eingangssignale in den verbleibenden Messtakten eines jeweiligen Messmittelungszyklus erfasst und von der übergeordneten Steuereinheit kumulierend zu einem dritten Messwert oder weiteren Messwerten gemittelt werden.

Der dritte Sensor kann z.B. ein Temperatursensor sein, welcher zur Korrektur des ersten Eingangssignals im Sinne der Kompensation von Temperaturfehlern herangezogen werden kann. Insbesondere dient der dritte Sensor nicht zur Erfassung einer Hauptmessgröße.

Nach einer weiteren Verfahrensvariante wird zumindest ein Kalibrierungszyklus für den ersten und zweiten A/D-Umsetzer nach einer vorgegebenen Anzahl von Messmittelungszyklen von der übergeordneten Steuereinheit vorgegeben.

Alternativ dazu wird wechselweise ein Kalibrierungszyklus für den ersten oder zweiten A/D-Umsetzer nach einer vorgegebenen Anzahl von Messmittelungszyklen von der übergeordneten Steuereinheit vorgegeben.

Vorzugsweise wird jeweils eine den Messmittelungszyklen entsprechende gleiche Gesamtanzahl von Messtakten für einen Kalibrierungszyklus von der übergeordneten Steuereinheit vorgegeben. Der Kalibrierungszyklus bzw. die Kalibrierungszyklen dienen dazu, ein Wegdriften der Messwerte im Laufe der Zeit, wie z.B. durch Temperatureinflüsse, zu kompensieren.

Die Aufgabe der Erfindung wird weiterhin durch eine analoge Eingabeschaltung mit elektrischen Eingängen für mehrere analoge Eingangssignale gelöst. Die Eingabeschaltung weist einen Messwertausgang zur Ausgabe korrespondierender Messwerte sowie einen Meldeausgang zur Ausgabe einer Meldung, insbesondere einer Fehlermeldung oder einer Signaländerungsmeldung, auf. Die analoge Eingabeschaltung weist eine übergeordnete Steuereinheit, zwei A/D-Umsetzer sowie zumindest einen vorgeschalteten ansteuerbaren Multiplexer zum Schalten zumindest eines Teils der Einganssignale an den jeweiligen A/D-Umsetzer mittels der Steuereinheit auf. Die Steuereinheit weist in kennzeichnender Weise Mittel zur Durchführung des erfindungsgemäßen Verfahrens sowie Ausgabemittel für die Messwerte und für die Meldungen auf.

Eine derartige Eingabeschaltung ist vorteilhaft nur hinsichtlich der Messstrecke von Signaleingang zum Signalausgang redundant ausgelegt. Es entfällt vorteilhaft eine doppelte Auslegung der Sensoreinheiten bzw. Messstellen. Durch die Einteilung in "verschachtelte" Zyklen ist es möglich, die Überwachung zu realisieren und gleichzeitig Geschwindigkeitseinbußen zu vermeiden, indem innerhalb eines dieser Zyklen auf ein zeitraubendes Multiplexen verzichtet wird. Hierdurch können kostengünstige A/D-Umsetzer eingesetzt werden, die im Einzelbetrieb und ohne die verschachtelten Zyklen nicht verwendbar wären.

Die Erfindung wird weiterhin gelöst durch einen Messsensor, welcher mehrere Sensoreinheiten zur Erfassung physikalischer Größen wie Druck, Kraft, Temperatur oder dergleichen aufweist. Der Messsensor weist zumindest eine erfindungsgemäße analoge Eingabeschaltung zur Erfassung entsprechender analoger Eingangssignale auf, die von den jeweiligen Sensoreinheiten stammen.

Schließlich wird die Erfindung durch einen Messumformer gelöst, welcher insbesondere zum Betrieb an einer Zweileiter-Stromschleife vorgesehen ist. Bei der Zweileiter-Stromschleife handelt es sich insbesondere um eine im industriellen Bereich und im Anlagenbereich weit verbreitete standardisierte 4-20 mA-Zweileiter-Stromschleife. Ein derartiger Messumformer weist mehrere Sensoreinheiten, vorzugsweise in integrierter Form, zur Erfassung physikalischer Größen wie Druck, Kraft, Temperatur oder dergleichen auf.

Der Messumformer weist zumindest eine erfindungsgemäße analoge Eingabeschaltung zur Erfassung entsprechender, von den jeweiligen Sensoreinheiten stammender analoger Eingangssignale auf.

Die Erfindung sowie vorteilhafte Ausführungen der Erfindung werden im Weiteren anhand der nachfolgenden Figuren näher beschrieben. Es zeigen
- FIG 1: eine analoge Eingabeschaltung zur Erfassung mehre- rer analoger Eingangssignale mit einer Steuerein- heit zur Durchführung des erfindungsgemäßen Verfah- rens sowie einen Messsensor und einen Messumformer,
- FIG 2: einen ersten Messmittelungszyklus gemäß dem erfin- dungsgemäßen Verfahren,
- FIG 3: einen ersten Messmittelungszyklus gemäß einer ers- ten Verfahrensvariante,
- FIG 4: einen ersten und zweiten Messmittelungszyklus gemäß einer zweiten Verfahrensvariante und
- FIG 5: einen ersten und zweiten Messmittelungszyklus gemäß einer dritten Verfahrensvariante.

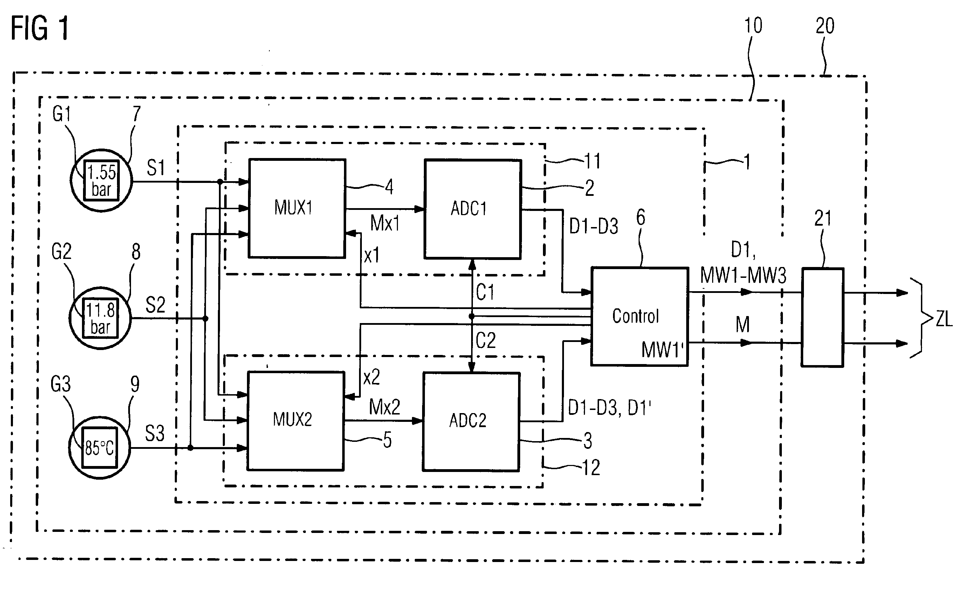

FIG 1 zeigt eine analoge Eingabeschaltung 1 zur Erfassung mehrerer analoger Eingangssignale S1-S3 mit einer Steuereinheit 6 zur Durchführung des erfindungsgemäßen Verfahrens sowie einen Messsensor 10 und Messumformer 20.

Im linken Teil der FIG 1 sind beispielhaft drei Sensoreinheiten 7-9 dargestellt, welche analoge Eingangssignale S1-S3 als Messsignale für die nachfolgende analoge Eingabeschaltung 1 bereitstellen. Die erste Sensoreinheit 7 ist beispielhaft ein Differenzdruckmesser, welcher gemäß dem Beispiel von FIG 1 einen Differenzdruck als Hauptmessgröße G1 in Form eines ersten Eingangssignals S1 erfasst. Die Hauptmessgröße G1 weist im Beispiel der FIG 1 beispielhaft den Wert 1,55 bar auf. Diese Hauptmessgröße G1 wird mittels der Eingabeschaltung 1 sicher, mit hoher Messgenauigkeit und in sehr kurzen Zeitabständen überwacht.

Bei der beispielhaften zweiten Sensoreinheit 8 handelt es sich um einen Absolutdruckmesser. Er erfasst als Messgröße G2 einen Absolutdruckwert, im Beispiel der FIG 1 einen Wert von 11,8 bar, in Form eines zweiten Eingangssignals S2 bzw. Messsignals. Die von der zweiten Sensoreinheit 8 erfasste Messgröße G2 kann z.B. zur Korrektur der von der ersten Sensoreinheit 7 erfassten Hauptmessgröße G1 dienen. Im linken unteren Teil der FIG 1 ist eine Temperatursensoreinheit 9 dargestellt, welche beispielhaft eine Temperatur von 85°C als dritte Messgröße G3 erfasst. Sie kann gleichfalls zur Korrektur der Hauptmessgröße G1 dienen.

Die analogen Eingangssignale S1-S3 werden beispielhaft zwei Multiplexern 4, 5 zugeführt, welche die jeweiligen analogen Eingangssignale S1-S3 in Abhängigkeit von entsprechenden Umschaltsignalen X1, X2 an die jeweiligen nachfolgenden A/D-Umsetzer 2, 3 schalten. Mit den Bezugszeichen MX1, MX2 sind gemultiplexte Eingangssignale bezeichnet. Zum Ansteuern der Multiplexer 4, 5 sind diese mit einer Steuereinheit 6, vorzugsweise mit einem Mikrocontroller, verbunden. Die Steuereinheit 6 ist weiterhin mit den beiden A/D-Umsetzern 2, 3 signaltechnisch verbunden, um die verschiedenen Betriebsarten der A/D-Umsetzer 2, 3 mittels entsprechender Steuersignale C1, C2 einzustellen. Es kann, wie in der FIG 1 beispielhaft gezeigt, jeweils ein Multiplexer 4, 5 mit einem der A/D-Umsetzer 2, 3 eine elektronische Baueinheit 11, 12 bilden. Dies ist im Beispiel der FIG 1 gestrichelt dargestellt. Die beiden A/D-Umsetzer 2, 3 stellen ausgangsseitig digitale Einzelmesswerte D1-D3 bereit. Diese werden von der Steuereinheit 6 erfasst und entsprechend rechnerisch behandelt. Ausgangsseitig stellt die Steuereinheit 6 an einem Messwertausgang zu den Messgrößen G1-G3 korrespondierende digitale Messwerte MW1-MW3 sowie erste Einzelmesswerte D1 bereit. Letztere können z.B. von einer übergeordneten Prozesssteuerung zur schnellen Regelung herangezogen werden. An einem Meldeausgang ist dann gegebenenfalls eine Fehlermeldung M oder eine Signaländerungsmeldung im Sinne einer Warnmeldung M abgreifbar.

Die Sensoreinheiten 7-9 sowie die erfindungsgemäße analoge Eingabeschaltung 1 sind im Beispiel der FIG 1 zu einem Messsensor 10 zusammengefasst. Sämtliche Komponenten können z.B. auf einer Leiterplatte angeordnet sein. Mit dem Bezugszeichen 20 ist weiterhin ein Messumformer gezeigt, welcher darüber hinaus eine Zweileiter-Anschalteinheit 21 aufweist. Diese setzt die digitalen Messwerte MW1-MW3, die digitalen Einzelmesswerte D1 sowie die Meldungen M z.B. in frequenzumgetastete HART^{®}-Feldbussignale um (HART für Highway Addressable Remote Transducer). Mittels einer solchen HART^{®}-Kommunikation kann ein analoges Feldbussystem, welches auf einer standardisierten 4-20 mA-Zweileiter-Stromschleife ZL basiert, erweitert werden. HART^{®} ist ein standardisiertes, weit verbreitetes Kommunikationssystem zum Aufbau industrieller digitaler Feldbusse. Es ermöglicht die digitale Kommunikation mehrerer Teilnehmer (Feldgeräte) über einen gemeinsamen digitalen Feldbus über die Zweileiter-Stromschleife ZL entsprechend dem älteren 4-20 mA-Standard. Vorhandene Leitungen nach dem 4-20 mA-Standard können direkt benutzt und beide Systeme parallel betrieben werden. Alternativ oder zusätzlich kann einer der digitalen Messwerte MW1-MW3 durch Einprägen entsprechender Schleifenstromwerte in die Zweileiter-Stromschleife ZL mittels der Zweileiter-Anschalteinheit 21 über diese Zweileiter-Stromschleife ZL übertragen werden.

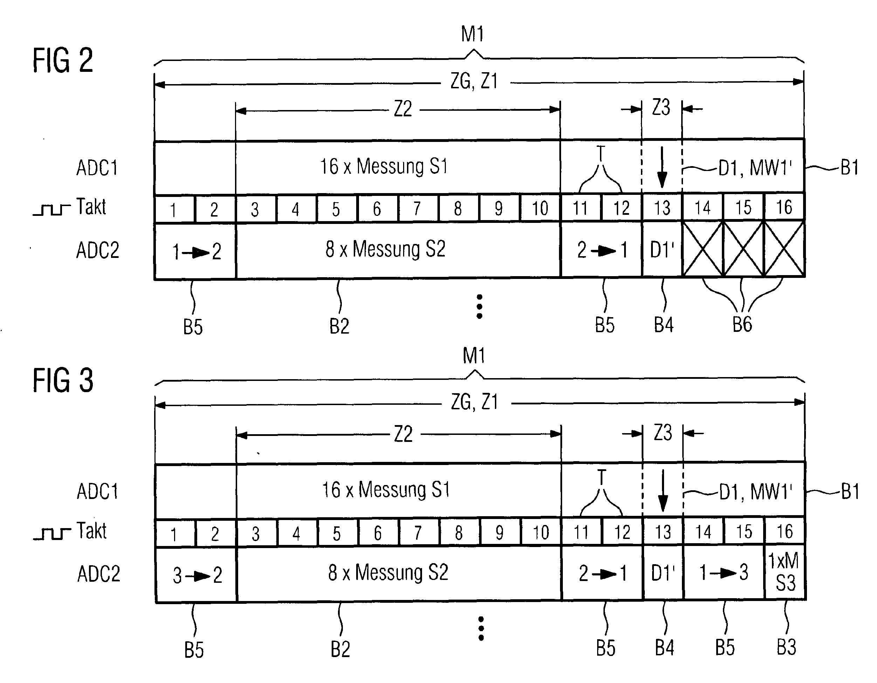

FIG 2 zeigt einen ersten Messmittelungszyklus M1 gemäß dem erfindungsgemäßen Verfahren.

Es ist gemäß der Erfindung ein erster Messmittelungszyklus M1 mit einer vorgegebenen Gesamtanzahl ZG von Messtakten T vorgegeben. Ein Messtakt T ist typischerweise die Mindestzeitdauer, die ein A/D-Umsetzer 2, 3 zum Umsetzen einer analogen Eingangsgröße S1-S3 in einen digitalen Einzelmesswert D1-D3 benötigt. Ein Messmittelungstakt M1 weist vorzugsweise eine Gesamtanzahl ZG von Messtakten T im Bereich von acht bis 32 auf. Die Gesamtanzahl ZG kann in besonderen Fällen auch darunter liegen, wie z.B. bei sechs, oder darüber liegen, wie z.B. bei 40.

Im oberen Teil der FIG 2 ist ein sich beispielhaft über 16 Messtakte T erstreckender Messblock B1 dargestellt. Innerhalb des ersten Messmittelungszyklus M1 wird ein erstes Eingangssignal S1 von dem ersten A/D-Umsetzer 2 in einer ersten Anzahl Z1 von Messtakten T erfasst. Vorzugsweise wird das erste Eingangssignal S1, welches einer Hauptmessgröße G1 zugeordnet ist, in einem Großteil der zur Verfügung stehenden Gesamtanzahl ZG von Messtakten T erfasst, wie z.B. mit einer ersten Anzahl Z1 von Messtakten T in einem Bereich von 12 bis 16. Im Beispiel der FIG 1 entspricht die erste Anzahl Z1 der Gesamtanzahl ZG von Messtakten T, sodass das erste Eingangssignal S1 fortlaufend erfasst werden kann. Es wird dabei jeweils ein pro Messtakt T erfasster digitaler Einzelmesswert D1 von der Steuereinheit 6 zu einem ersten Messwert MW1 kumulierend gemittelt. Mit "kumulierend" ist gemeint, dass die jeweiligen Einzelmesswerte D1-D3 nach jedem Messtakt T von der Steuereinheit 6 erfasst und zu einem jeweiligen Messwert MW1-MW3 mit dabei zunehmender Messgenauigkeit gemittelt werden.

Es wird weiterhin ein zweites Eingangssignal S2, welches einer zweiten Messgröße A2 zugeordnet ist, von dem zweiten A/D-Umsetzer 3 in einer im Vergleich zur ersten Anzahl Z1 geringeren Anzahl Z2 von Messtakten T erfasst. Die jeweiligen digitalen Einzelmesswerte D2 werden durch die Steuereinheit 6 kumulierend zu einem zweiten Messwert MW2 gemittelt. Die zweite Anzahl Z2 von Messtakten T entspricht in etwa 40%-60% der Gesamtanzahl ZG von Messtakten T. Die Messung des zweiten Eingangssignals S2 erfolgt im Beispiel der FIG 2 in einem zweiten Messblock B2, welcher sich beispielhaft vom dritten bis zum zehnten Messtakt T erstreckt.

Mit dem Bezugszeichen B5 sind Umschaltblöcke bezeichnet, welche zum Umschalten der analogen Eingangssignale S1-S3 an den jeweiligen A/D-Umsetzer 2, 3 benötigt werden. Bestimmend für die notwendigen Umschaltzeiten sind Filtereinschwingvorgänge, insbesondere im Eingangskreis der beiden A/D-Umsetzer 2, 3. Im Beispiel der FIG 2 werden zum Umschalten von einem Eingangssignal S1-S3 auf ein anderes Eingangssignal S1-S3 zwei Messtakte T benötigt. Es ist ersichtlich, dass ein häufiges Umschalten der Messkanäle zu einer drastisch reduzierten effektiven Messdatenrate des jeweiligen A/D-Umsetzers 2, 3 führt. Im Beispiel der FIG 2 erfolgt im Umschaltblock B5 während des ersten und zweiten Messtaktes T eine Umschaltung des ersten Eingangssignals S1 auf das zweite Eingangssignal S2 an den zweiten A/D-Umsetzer 3. Nach erfolgter Messung des zweiten Eingangssignals S2 in dem zweiten Messblock B2 erfolgt in einem weiteren Umschaltblock B5 die Umschaltung des zweiten Eingangssignals S2 auf das erste Eingangssignal S1.

Es wird nun weiterhin gemäß der Erfindung das erste Eingangssignal S1 synchron zum ersten A/D-Umsetzer 2 von dem zweiten A/D-Umsetzer 3 in einer dritten Anzahl Z3 von Messtakten T als zumindest ein weiterer Einzelmesswert D1' erfasst. Im Beispiel der FIG 2 erfolgt die synchrone Erfassung eines ersten Einzelmesswertes D1 sowie eines weiteren Einzelmesswertes D1' in nur einem einzigen Messtakt T. Dieser Messtakt T ist im Beispiel der FIG 2 mit einem Pfeil als Vergleichsblock B4 gekennzeichnet. Im Vergleich zu der zur Verfügung stehenden Gesamtanzahl ZG von Messtakten T weist die dritte Anzahl Z3 von Messtakten T eine Anzahl im Bereich von 5%-10% der Gesamtanzahl ZG von Messtakten T auf. Vorzugsweise ist zur synchronen Erfassung jeweils nur ein einziger Messtakt T vorgesehen. Alternativ kann die Erfassung auch in einem weiteren nachfolgenden Messtakt T erfasst werden, wobei dann der jeweilige weitere erste Einzelmesswert D1' zu einem gemeinsamen ersten weiteren Einzelmesswert D1' gemittelt werden kann. Es können beispielsweise auch zwei einzelne Messtakte T zum parallelen synchronen Vergleich verwendet werden, wobei diese vorzugsweise als Vergleichsblöcke B4 zeitlich so über einen Messmittelungszyklus M1 verteilt angeordnet sind, dass etwa ein Drittel der Gesamtanzahl ZG von Messtakten T zwischen zwei solchen Vergleichsblöcken B4 liegt.

Gemäß der Erfindung wird eine Meldung M ausgegeben, wenn der zumindest eine weitere Einzelmesswert D1' den parallel vom ersten A/D-Umsetzer 2 erfassten Einzelmesswert D1 um eine maximal zulässige Abweichung überschreitet. Die zulässige Abweichung kann beispielsweise in einem Bereich von 0,1% bis 3% des zur Verfügung stehenden Messwertbereichs liegen. Alternativ wird die Meldung M ausgegeben, wenn die Abweichung des zumindest einen weiteren Einzelmesswerts D1' von dem bis dahin gemittelten ersten Messwert MW1' eine maximal zulässige Abweichung überschreitet.

Mit dem Bezugszeichen B6 sind Stromsparblöcke bezeichnet. Während dieser Zeit ruht die Messwerterfassung des zweiten A/D-Umsetzer 3. Dadurch wird in diesen nicht benötigten Messtakten T vorteilhaft der Stromverbrauch der erfindungsgemäßen analogen Eingabeschaltung 1 reduziert. Der im Beispiel der FIG 2 gezeigte Messmittelungszyklus M1 wird, wie durch die drei Punkte fortgesetzte angedeutet, zyklisch wiederholt.

FIG 3 zeigt einen ersten Messmittelungszyklus M1 gemäß einer ersten Verfahrensvariante.

Im Unterschied zum Beispiel der FIG 2 wird in einem Messblock B3 vom jeweiligen A/D-Umsetzer 2, 3 neben dem zweiten Eingangssignal S2 ein drittes Eingangssignal S3 in den verbleibenden Messtakten T des gezeigten Messmittelungszyklus M1 erfasst. Dieser wird von der übergeordneten Steuereinheit 6 kumulierend zu einem dritten Messwert MW3 gemittelt.

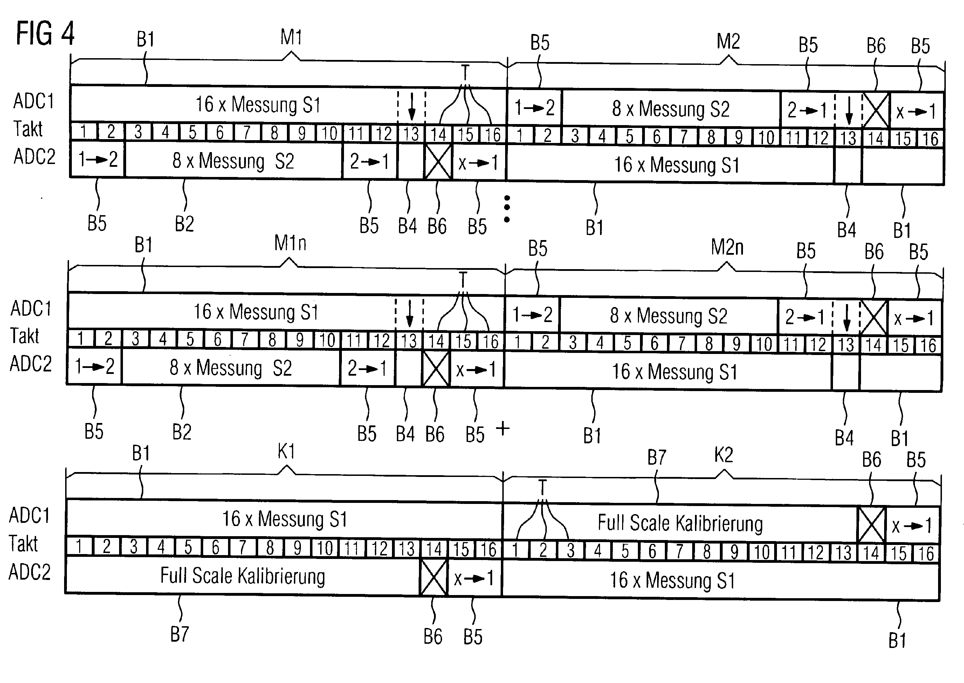

FIG 4 zeigt einen ersten und zweiten Messmittelungszyklus M1, M2 gemäß einer zweiten Verfahrensvariante.

Erfindungsgemäß wird von der übergeordneten Steuereinheit 6 ein zweiter Messmittelungszyklus M2 mit der gleichen Gesamtanzahl ZG von Messtakten T vorgegeben. Es wird dabei die Zuordnung der A/D-Umsetzer 2, 3 zu den analogen Eingangssignalen S1-S3 nach jedem Messmittelungszyklus M1, M2 gewechselt. Mit dem Bezugszeichen M1n, M2n sind die zyklischen Fortsetzungen der Messmittelungszyklen M1, M2 bezeichnet. Der besondere Vorteil dieser wechselnden Anordnung ist, dass ein fehlerhaft arbeitender A/D-Umsetzer 2, 3 von der übergeordneten Steuereinheit 6 direkt ermittelt werden kann. Dadurch steigt die Zuverlässigkeit der erfindungsgemäßen analogen Eingabeschaltung 1 im Vergleich zur vorherigen Ausführungsform.

Im unteren Teil der FIG 4 schließen sich den vorherigen Messmittelungszyklen M1, M2, M1n, M2n zwei Kalibrierungszyklen K1, K2 an. Im Beispiel der gezeigten FIG 4 wird von der übergeordneten Steuereinheit 6 jeweils eine den Messmittelungszyklen M1, M2 entsprechende gleiche Gesamtanzahl ZG von Messtakten T für einen Kalibrierungszyklus K1, K2 vorgegeben. Dadurch wird erreicht, dass nach einer vorgegebenen Anzahl - hier eine Anzahl von n Messtakten T - eine Kalibrierung der beiden A/D-Umsetzer 2, 3 durchgeführt wird. Die wechselweise Durchführung der Kalibrierung hat dabei den Vorteil, dass das zur Hauptmessgröße G1 gehörende erste Eingangssignal S1 weiterhin fortlaufend erfasst wird.

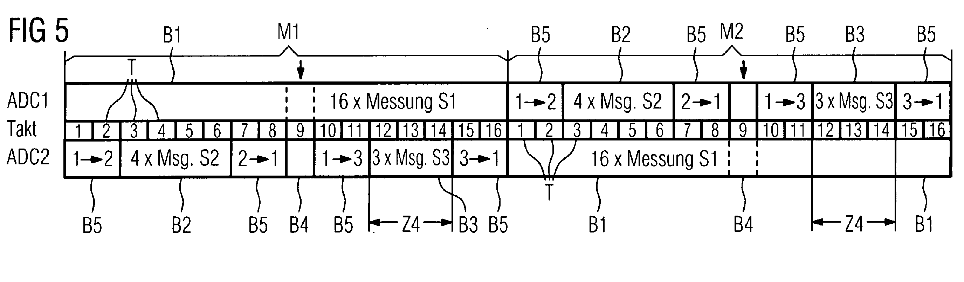

FIG 5 zeigt einen ersten und zweiten Messmittelungszyklus M1, M2 gemäß einer dritten Verfahrensvariante.

Im vorliegenden Beispiel erfolgt wiederum wechselweise die Erfassung der analogen Eingangssignale S1-S3 durch die beiden A/D-Umsetzer 2, 3. Im Vergleich zu den vorhergehenden Figuren FIG 2 bis FIG 4 erfolgt die Erfassung des zweiten Eingangssignals S2 in beispielhaft vier Messtakten T und die Erfassung eines dritten Eingangssignals S3 in drei Messtakten T.

Wesentlich ist, dass das erste Eingangssignal S1, welches einer Hauptmessgröße G1 zugeordnet ist, vorzugsweise jeweils über die gesamte zeitliche Breite eines Messmittelungszyklus M1, M2 ermittelt wird. Währenddessen erfolgt zumindest einmal oder auch mehrmals die Erfassung des ersten Sensorsignals S1 synchron durch den zweiten A/D-Umsetzer 3. Vorzugsweise werden dann innerhalb eines Messtaktes T die beiden digitalen Einzelmesswerte D1, D1' miteinander verglichen, um möglichst frühzeitig eine unzulässige Abweichung voneinander festzustellen zu können. In diesem Fall erfolgt eine Ausgabe einer Meldung M, welche einen Fehler in der Messwerterfassung oder ein sehr schnelle Änderung des ersten Eingangssignals S1 anzeigt.

## Patentansprüche

1. Verfahren zur sicheren Erfassung mehrerer analoger Eingangssignale (S1-S3), welche mittels zweier A/D-Umsetzer (2, 3) in entsprechende digitale Einzelmesswerte (D1-D3) umgesetzt werden, wobei ein erster Messmittelungszyklus (M1) mit einer vorgegebenen Gesamtanzahl (ZG) von Messtakten (T) von einer übergeordneten Steuereinheit (6) vorgegeben wird, wobei die A/D-Umsetzer (2, 3) mittels zumindest eines von der Steuereinheit (6) ansteuerbaren Multiplexers (4, 5) an zumindest einen Teil der Eingangssignale (S1-S3) geschaltet werden können, wobei jeweils innerhalb des ersten Messmittelungszyklus (M1) ein erstes Eingangssignal (S1) von dem ersten A/D-Umsetzer (2) in einer ersten, vorzugsweise einer der Gesamtzahl (ZG) entsprechenden Anzahl (Z1) von Messtakten (T) erfasst und von der Steuereinheit (6) kumulierend zu einem ersten Messwert (MW1) gemittelt wird, wobei ein zweites Eingangssignal (S2) von dem zweiten A/D-Umsetzer (3) in einer im Vergleich zur ersten Anzahl (Z1) geringeren Anzahl (Z2) von Messtakten (T) erfasst und kumulierend zu einem zweiten Messwert (MW2) gemittelt wird, wobei das erste Eingangssignal (S1) von dem zweiten A/D-Umsetzer (3) in einer dritten Anzahl (Z3) von Messtakten (T), vorzugsweise in nur einem Messtakt (T), als zumindest ein weiterer Einzelmesswert (D1') erfasst wird und wobei eine Meldung (M) ausgegeben wird, wenn eine Abweichung des zumindest einen weiteren Einzelmesswerts (D1') von dem synchron vom ersten A/D-Umsetzer (2) erfassten Einzelmesswert (D1) oder von den bis dahin gemittelten ersten Messwerten (MW1') einen maximal zulässigen Betrag der Abweichung überschreitet.

2. Verfahren nach Anspruch 1,
**dadurch gekennzeichnet, dass** von der übergeordneten Steuereinheit (6) ein zweiter Messmittelungszyklus (M2) mit der gleichen Gesamtanzahl (ZG) von Messtakten (T) vorgegeben wird, wobei die Zuordnung der A/D-Umsetzer (2, 3) zu den analogen Eingangssignalen (S1-S3) nach jedem Messmittelungszyklus (M1, M2) gewechselt wird.

3. Verfahren nach Anspruch 1 oder 2,
**dadurch gekennzeichnet, dass** der zumindest eine Multiplexer (4, 5) von der übergeordneten Steuereinheit (6) derart angesteuert wird, dass vom jeweiligen A/D-Umsetzer (2, 3) neben dem zweiten Eingangssignal (S2) ein drittes Eingangssignal (S3) oder weitere Eingangssignale in den verbleibenden Messtakten (T) eines jeweiligen Messmittelungszyklus (M1, M2) erfasst und von der übergeordneten Steuereinheit (6) kumulierend zu einem dritten Messwert (MW3) oder weiteren Eingangssignalen gemittelt werden.

4. Verfahren nach einem der Ansprüche 1 bis 3,
**dadurch gekennzeichnet, dass** zumindest ein Kalibrierungszyklus (K1, K2) für den ersten und zweiten A/D-Umsetzer (2, 3) nach einer vorgegebenen Anzahl von Messmittelungszyklen (M1, M2) von der übergeordneten Steuereinheit (6) vorgegeben wird.

5. Verfahren nach Anspruch 2 oder 3,
**dadurch gekennzeichnet, dass** wechselweise ein Kalibrierungszyklus (K1, K2) für den ersten oder zweiten A/D-Umsetzer (2, 3) nach einer vorgegebenen Anzahl von Messmittelungszyklen (M1, M2) von der übergeordneten Steuereinheit (6) vorgegeben wird.

6. Verfahren nach 4 oder 5,
**dadurch gekennzeichnet, dass** jeweils eine den Messmittelungszyklen (M1, M2) entsprechende gleiche Gesamtanzahl (ZG) von Messtakten (T) für einen Kalibrierungszyklus (K1, K2) von der übergeordneten Steuereinheit (6) vorgegeben wird.

7. Analoge Eingabeschaltung (1) mit elektrischen Eingängen für mehrere analoge Eingangssignale (S1-S3), mit einem Messwertausgang zur Ausgabe korrespondierender Messwerte (MW1-MW3) und erster Einzelmesswerte (D1) sowie mit einem Meldeausgang zur Ausgabe zumindest einer Meldung (M), wobei die analoge Eingabeschaltung eine übergeordnete Steuereinheit (6), zwei A/D-Umsetzer (2, 3) sowie zumindest einen vorgeschalteten ansteuerbaren Multiplexer (4, 5) zum Schalten zumindest eines Teils der Eingangssignale (S1-S3) an den jeweiligen A/D-Umsetzer (2, 3) mittels der Steuereinheit (6) aufweist, **dadurch gekennzeichnet,**
**dass** die Steuereinheit (6) Mittel zur Durchführung des Verfahrens nach einem der vorangegangenen Ansprüche sowie Ausgabemittel für die Messwerte (MW1-M3), für die Einzelmesswerte (D1) und für die Meldung (M) aufweist.

8. Messsensor mit mehreren Sensoreinheiten (7-9) zur Erfassung physikalischer Messgrößen wie Druck, Kraft, Temperatur oder dergleichen, wobei der Messsensor zumindest eine analoge Eingabeschaltung (1) nach Anspruch 7 zur Erfassung entsprechender, von den jeweiligen Sensoreinheiten (7-9) stammender analoger Eingangssignale (S1-S3) aufweist.

9. Messumformer, insbesondere zum Betrieb an einer Zweileiter-Stromschleife (ZL), mit mehreren Sensoreinheiten (7-9) zur Erfassung physikalischer Messgrößen wie Druck, Kraft, Temperatur oder dergleichen, wobei der Messumformer zumindest eine analoge Eingabeschaltung (1) nach Anspruch 7 zur Erfassung entsprechender, von den jeweiligen Sensoreinheiten (7-9) stammender analoger Eingangssignale (S1-S3) aufweist.

## Claims

1. Method for the reliable acquisition of a plurality of analogue input signals (S1-S3) which are converted by means of two A/D converters (2, 3) into corresponding discrete digital measured values (D1-D3), wherein a first measurement averaging cycle (M1) having a predefined total number (ZG) of measurement intervals (T) is predefined by a higher-order control unit (6), wherein the A/D converters (2, 3) can be switched by means of at least one multiplexer (4, 5) which can be controlled by the control unit (6) to at least some of the input signals (S1-S3), wherein a first input signal (S1) is acquired by the first A/D converter (2) in each case within the first measurement averaging cycle (M1) in a first number (21) of measurement intervals (T) that preferably corresponds to the total number (ZG) and is cumulatively averaged by the control unit (6) to form a first measured value (MW1), wherein a second input signal (S2) is acquired by the second A/D converter (3) in a smaller number (Z2) of measurement intervals (T) compared to the first number (Z1) and cumulatively averaged to form a second measured value (MW2), wherein the first input signal (S1) is acquired by the second A/D converter (3) in a third number (Z3) of measurement intervals (T), preferably in only one measurement interval (T), as at least one further discrete measured value (D1'), and wherein a message (M) is output if a deviation of the at least one further discrete measured value (D1') from the discrete measured value (D1) acquired synchronously by the first A/D converter (2) or from the first measured values (MW1') averaged up to that point exceeds a maximum permissible absolute value of the deviation.

2. Method according to claim 1,
**characterised in that** a second measurement averaging cycle (M2) having the same total number (ZG) of measurement intervals (T) is predefined by the higher-order control unit (6), wherein the assignment of the A/D converters (2, 3) to the analogue input signals (S1-S3) is alternated after each measurement averaging cycle (M1, M2).

3. Method according to claim 1 or 2,
**characterised in that** the at least one multiplexer (4, 5) is controlled by the higher-order control unit (6) in such a way that a third input signal (S3) or further input signals is/are acquired by the respective A/D converter (2, 3) in the remaining measurement intervals (T) of a particular measurement averaging cycle (M1, M2) in addition to the second input signal (S2) and cumulatively averaged by the higher-order control unit (6) to form a third measured value (MW3) or further input signals.

4. Method according to one of claims 1 to 3,
**characterised in that** at least one calibration cycle (K1, K2) is predefined by the higher-order control unit (6) for the first and second A/D converter (2, 3) after a predefined number of measurement averaging cycles (M1, M2).

5. Method according to claim 2 or 3,
**characterised in that** a calibration cycle (K1, K2) is predefined by the higher-order control unit (6) alternately for the first or second A/D converter (2, 3) after a predefined number of measurement averaging cycles (M1, M2).

6. Method according to claim 4 or 5,
**characterised in that** an identical total number (ZG) of measurement intervals (T) corresponding to the measurement averaging cycles (M1, M2) is predefined by the higher-order control unit (6) for one calibration cycle (K1, K2) in each case.

7. Analogue input circuit (1) with electrical inputs for a plurality of analogue input signals (S1-S3), having a measured value output for outputting corresponding measured values (MW1-MW3) and first discrete measured values (D1) and having a message output for outputting at least one message (M), wherein the analogue input circuit comprises a higher-order control unit (6), two A/D converters (2, 3) and at least one controllable multiplexer (4, 5) connected upstream for the purpose of switching at least some of the input signals (S1-S3) to the respective A/D converter (2, 3) by means of the control unit (6), **characterised in that**
the control unit (6) has means for performing the method according to one of the preceding claims as well as output means for the measured values (MW1-M3), for the discrete measured values (D1) and for the message (M).

8. Measurement sensor having a plurality of sensor units (7-9) for acquiring physical measured variables such as pressure, force, temperature or the like, wherein the measurement sensor has at least one analogue input circuit (1) according to claim 7 for acquiring corresponding analogue input signals (S1-S3) originating from the respective sensor units (7-9) .

9. Measurement transducer, in particular for operation on a two-wire current loop (ZL), having a plurality of sensor units (7-9) for acquiring physical measured variables such as pressure, force, temperature or the like, wherein the measurement transducer has at least one analogue input circuit (1) according to claim 7 for acquiring corresponding analogue input signals (S1-S3) originating from the respective sensor units (7-9) .

## Revendications

1. Procédé d'acquisition sécurisée de plusieurs signaux ( S1 à S3 ) analogiques d'entrée, qui sont transformés en des valeurs ( D1 à D3 ) de mesure individuelles numériques correspondantes au moyen de deux convertisseurs ( 2, 3 ) A/N, dans lequel un premier cycle ( M1 ) ayant un nombre ( ZG ) global prescrit de cadences ( T ) de mesure est prescrit par une unité ( 6 ) de commande supérieure hiérarchiquement, les convertisseurs ( 2, 3 ) A/N pouvant être connectés sur au moins une partie des signaux ( S1 à S3 ) d'entrée au moyen d'un multiplexeur ( 4, 5 ), qui peut être commandé par l'unité ( 6 ) de commande, respectivement à l'intérieur du premier cycle ( M1 ), dans lequel on fait une moyenne de mesures, un premier signal ( S1 ) d'entrée étant acquis par le premier convertisseur ( 2 ) A/N dans un premier nombre ( Z1 ) de cadences ( T ) de mesure correspondant, de préférence, au nombre ( ZG ) global et il en est fait la moyenne par l'unité ( 6 ) de commande, de manière cumulée, en une première valeur ( NW1 ) de mesure, dans lequel un deuxième signal ( S2 ) d'entrée est acquis par le deuxième convertisseur ( 3 ) A/N dans un nombre ( Z2 ) de cadences de mesure plus petit que le premier nombre ( Z1 ) et il en est fait la moyenne de manière cumulée en une deuxième valeur ( MW ) de mesure, dans lequel le premier signal ( S1 ) d'entrée est acquis par le deuxième convertisseur ( 3 ) A/N dans un troisième nombre ( Z3 ) de cadences ( T ) de mesure, de préférence dans seulement une cadence ( T ) de mesure, en tant qu'au moins une autre valeur ( D1' ) individuelle de mesure et dans lequel un message ( M ) est émis, si un écart de la au moins une autre valeur ( D1' ) individuelle de mesure à la valeur ( D1 ) individuelle de mesure acquise de manière synchrone par le premier convertisseur ( 2 ) A/N ou aux premières valeurs ( MW1' ) de mesure dont on a fait la moyenne jusqu'ici dépasse une valeur absolue maximum admissible de l'écart.

2. Procédé suivant la revendication 1,
**caractérisé en ce que**
un deuxième cycle ( M2 ), dans lequel on effectue une moyenne de mesure avec le même nombre ( ZG ) global de cadences ( T ) de mesure, est prescrit par l'unité ( 6 ) de commande supérieure hiérarchiquement, l'affectation des convertisseurs ( 2,3 ) A/N aux signaux ( S1 à S3 ) analogiques d'entrée étant alternée suivant chaque cycle ( M1, M2 ) dans lequel on effectue une moyenne de mesures.

3. Procédé suivant la revendication 1 ou 2,
**caractérisé en ce que** le au moins un multiplexeur ( 4, 5 ) est commandé par l'unité ( 6 ) de commande supérieure hiérarchiquement, de manière à ce que, outre le deuxième signal ( S2 ) d'entrée, un troisième signal ( S3 ) d'entrée ou d'autres signaux d'entrée soient détectés par le convertisseur ( 2, 3 ) A/N respectif dans les cadences ( T ) de mesure restantes d'un cycle ( M1, M2 ) respectif, dans lequel on fait une moyenne de mesures, et de manière à ce que la moyenne soit faite par l'unité ( 6 ) de commande supérieure hiérarchiquement, de manière cumulée, en une troisième valeur ( MW3 ) de mesure ou en d'autres signaux d'entrée.

4. Procédé suivant l'une des revendications 1 à 3,
**caractérisé en ce qu'**au moins un cycle ( K1, K2 ) d'étalonnage du premier et du deuxième convertisseurs ( 2, 3 ) A/N est prescrit par l'unité ( 6 ) de commande supérieure hiérarchiquement, après un nombre prescrit de cycles ( M1, M2 ) où l'on fait une moyenne de mesures.

5. Procédé suivant la revendication 2 ou 3,
**caractérisé en ce que**
il est prescrit, par l'unité ( 6 ) de commande supérieure hiérarchiquement, un cycle ( K1, K2 ) d'étalonnage du premier ou du deuxième convertisseurs ( 2, 3 ) A/N, après un nombre prescrit de cycles ( M1, M2 ) où l'on effectue une moyenne de mesures.

6. Procédé suivant la revendication 4 ou 5,
**caractérisé en ce qu'**il est prescrit, par l'unité ( 6 ) de commande supérieure hiérarchiquement, respectivement un même nombre ( ZG ) global de cadences ( T ) de mesure pour un cycle ( K1, K2 ) d'étalonnage correspondant aux cycles ( M1, M2 ) où l'on fait une moyenne de mesures.

7. Circuit ( 1 ) analogique d'entrée, comprenant des entrées électriques pour plusieurs signaux ( S1 à S3 ) analogique d'entrée, comprenant une sortie de valeurs de mesure pour la sortie de valeurs ( MW1 à MW3 ) correspondantes de mesure et de premières valeurs ( D1 ) individuelles, ainsi qu'une sortie de messages pour la sortie d'au moins un message ( M ), dans lequel le circuit analogique d'entrée comprend une unité ( 6 ) de commande supérieure hiérarchiquement, deux convertisseurs ( 2, 3 ) A/N, ainsi qu'au moins un multiplexeur ( 4, 5 ), pouvant être commandé et monté en amont, pour l'application d'au moins une partie des signaux ( S1 à S3 ) d'entrée aux convertisseurs ( 2, 3 ) A/N respectifs, au moyen de l'unité ( 6 ) de commande, **caractérisé**
**en ce que** l'unité ( 6 ) de commande a des moyens pour effectuer le procédé suivant l'une des revendications précédentes, ainsi que des moyens de sortie des valeurs ( MW1 à MW3 ) de mesure, pour des valeurs ( D1 ) individuelles de mesure et du message ( M ).

8. Capteur de mesure ayant plusieurs unités ( 7 à 9 ) de capteur, pour l'acquisition de grandeurs de mesure physiques, comme la pression, la force, la température ou analogue, le capteur de mesure ayant au moins un circuit ( 1 ) analogique d'entrée suivant la revendication 7, pour l'acquisition des signaux ( S1 à S3 ) analogiques d'entrée correspondants, provenant des unités ( 7 à 9 ) respectives de capteur.

9. Transducteur de mesure, notamment pour le fonctionnement sur une boucle ( ZL ) de courant à deux conducteurs, comprenant plusieurs unités ( 7 à 9 ) de capteur, pour l'acquisition de grandeurs de mesure physiques, comme la pression, la température ou analogue, le transducteur de mesure comprenant au moins un circuit ( 1 ) analogique d'entrée suivant la revendication 7, pour l'acquisition de signaux ( S1 à S3 ) analogiques d'entrée correspondants, provenant des unités ( 7 à 9 ) respectives de capteur.
